# EUROPEAN PATENT APPLICATION

(11) **EP 2 889 686 A1**
(43) Date of publication of application: **01.07.2015**
(21) Application number: 13820707.1
(22) Date of filing: 08.11.2013
(51) Int. Cl.: G03B 17/56, F16M 11/32

(54) **MULTI-FUNCTIONAL STAND**

(30) Priority: 01.11.2013 CN 201305314443
(71) Applicant: Zhongshan Sirui Photographic Equipment Industry Co., Ltd., The Third Industrial District Wuguishan Town Zhongshan Guangdong 528458 (CN)
(72) Inventor: HU, Xiaoyun, Zhongshan, Guangdong 528458 (CN)
(74) Representative: Tischner, Oliver
(86) International application number: PCT/CN2013/086765
(87) International publication number: WO 2015/062120

(57) **Abstract**

The invention discloses a multifunctional stand, which comprises a main rod; an adapting platform arranged at the upper end of the main rod and adapted to fix photographic or video shooting equipment; and a supporting seat arranged at the lower end of the main rod and used for supporting the main rod; at the lower end of the main rod is provided a first connecting structure, and at the upper end of the supporting seat is provided a second connecting structure; the first connecting structure and the second connecting structure are detachably connected with each other; and the second connecting structure is adapted to mount the adapting platform. In the invention, the multifunctional stand, when being in an assembled state, can be used as a high-mounted stand and can meet high-stand shooting requirement; meanwhile, the detached main rod can be used as an ordinary unipod, and after the adapting platform is mounted to the detached supporting seat through the second connecting structure, a low-angle stand can be formed to meet low-angle shooting requirement; and therefore, the multifunctional stand of the invention can form a high-mounted stand, a simple unipod and a low-angle shooting tripod through assembly and disassembly.

## Description

### Field of the Invention

The invention relates to a photographic and video shooting equipment, in particular, relates to a multifunctional stand which can be used as a unipod and a tripod.

### Background of the Invention

In general, skillful shooting in daily life can not do without the assistance from a tripod or a unipod. Functions of a stand could not be ignored no matter for a professional user or an amateur user, with the main function of stabilizing a camera. Currently, support devices of photographic and video shooting equipment mainly include unipods and tripods. Unipods have unique advantages in portability, flexibility and the like, while skillful shooting in actual shooting process often can not do without assistance from a tripod, for example in night scene shooting, micro shooting and the like, the main function of a tripod is stabilizing a camera to achieve some photographic effects. For outdoor shooting, it can be very inconvenient if a unipod and a tripod are carried at the same time, while for various photographic environments, sometimes the two kinds of stands need to be used at the same time.

To solve the above problem, Chinese patent document CN201215232Y discloses a multifunctional unipod composed of three supporting legs, a fixed seat connected with the three supporting legs, and a fixing piece for fixing the three supporting legs. When the three supporting legs are combined, an independent support leg is assembled. The upper ends of the supporting legs are movably connected with the fixed seat via pin shafts. The fixing piece is fixed above the fixed seat and among the upper portions of the three supporting legs via fixing caps. That is, in the multifunctional unipod described in the above patent document, transformation between a tripod and a unipod is achieved by combining the three supporting legs to form one independent support leg. Although the multifunctional unipod described in the above patent document can be used as a unipod, it is actually a tripod and is not really transformed to a unipod.

To solve the above problem, Chinese patent document CN201449508U discloses a detachable transformational structure of a multifunctional shooting tripod, which comprises foot-tube joints, foot-tube joint inserts fixedly connected with the foot-tube joints, tube components, outer tube inserts fixedly connected with the tube components, a tripod-head loading plate, a central tube insert fit connected to the tripod-head loading plate, and a central tube fit and connected to the central tube insert, wherein each foot-tube joint insert can be fit and connected to an outer tube insert; and a connecting structure fit to the tripod-head loading plate and the central tube insert can be exchanged with a connecting structure fit to the foot-tube joint insert and the outer tube insert. That is, in the detachable transformational structure of the multifunctional shooting tripod described in the above patent document, the foot-tube component and the foot-tube joint are connected in a detachable manner, and the tripod-head loading plate and the central tube are also detachable; meanwhile, the connecting structure fit to the tripod-head loading plate and the central tube insert can be exchanged with the connecting structure fit to the foot-tube joint insert and the outer tube insert, i.e., the tripod-head loading plate can be fit to the central tube insert, and also can be fit to the outer tube insert, and therefore, when the tripod needs to be used as a unipod, it only needs to detach one foot-tube component from a foot-tube joint and mount the tripod-head loading plate to use the tripod as a unipod.

The multifunctional shooting tripod with the detachable transformational structure described in the above patent document can realize high-angle shooting, and can be used as an ordinary unipod after being disassembled, but the multifunctional shooting tripod with such a structure cannot realize low-angle shooting, and can not satisfy users' requirement on photographic and video shooting equipment and some specific photographic effects in low-angle shooting.

### Summary of the Invention

To this end, the technical problem to be solved by the invention is that the structure of a multifunctional photographic tripod in the prior art can only transform between a conventional tripod and a simple unipod, but cannot realize low-angle shooting. In view of the above-described problems, it is one objective of the invention to provide a multifunctional stand with a simple structure that can become a high-mounted stand, a simple unipod and a low-angle stand through assembly and disassembly.

To achieve the above objective, in accordance with one embodiment of the invention, there is provided a multifunctional stand, comprising
a main rod;
an adapting platform, arranged at an upper end of the main rod and adapted for fixing a photographic or video shooting equipment; and
a supporting seat for supporting the main rod, arranged at a lower end of the main rod,
wherein, further comprising
a first connecting structure, provided at the lower end of the main rod;
a second connecting structure, adapted for mounting the adapting platform, provided at an upper end of the supporting seat and detachably connected with the first connecting structure).

In a class of this embodiment, a lower end of the first connecting structure (10) is adapted for being connected with a foot pin.

In a class of this embodiment, the first connecting structure comprises an upper joint secured to the lower end of the main rod, and a connecting knob slidably sleeved on the upper joint and restricted from slipping off from a lower end of the upper joint; the second connecting structure comprises a lower joint secured to the upper end of the supporting seat, and a connecting structure formed on the lower joint and adapted for being connected with the adapting platform; and the connecting knob is in threaded connection with the lower joint, and the connecting knob is screwed tightly to drive the upper joint to abut against the lower joint, so as to allow the main rod to be tightly connected with the supporting seat.

In a class of this embodiment, the upper end of the upper joint is pyramidal , provided with a narrower upper part and a wider lower part; a corresponding pyramidal inner cavity is formed at an upper end of the connecting knob; an internal thread is formed on an inner wall of a lower end of the connecting knob; an external thread matched with the internal thread is formed at an upper end of the lower joint; the foot pin is provided with an external thread; and the internal thread of the connecting knob are adapted for being connected with the external thread of the foot pin.

In a class of this embodiment, the multifunctional stand further comprises a joint sheath, sleeved outside the lower joint, for preventing the external thread of the lower joint from scratching hands.

In a class of this embodiment, the joint sheath is provided with a hollow structure; the lower end of the joint sheath is provided with a circumferential inner wall in threaded connection with the lower joint provided with a circumferential outer wall; a clearance provided between the circumferential inner wall of the upper end of the joint sheath and the circumferential outer wall of the lower joint is adapted for screwing the lower end of the connecting knob therein.

In a class of this embodiment, the first connecting structure comprises an upper joint secured to the lower end of the main rod; the second connecting structure comprises a lower joint secured to the upper end of the supporting seat, a connecting structure is formed on the lower joint and adapted for being connected the adapting platform; a connecting knob is slidably sleeved on the lower joint and restricted from slipping off from the upper end of the lower joint; and the connecting knob is in threaded connection with the upper joint, and the connecting knob is screwed tightly to drive the lower joint to abut against the upper joint, so as to allow the main rod to be tightly connected with the supporting seat.

In a class of this embodiment, the upper end of the lower joint is pyramidal , provided with a wider upper part and a narrower lower part, a corresponding pyramidal inner cavity is formed at a lower end of the connecting knob; an internal thread is formed on an inner wall of the upper end of the connecting knob, an external thread matched with the internal thread is formed at an outer side wall of the upper joint; the foot pin is provided with an internal thread; and the external thread of the upper joint is adapted for being connected with the internal thread of the foot pin.

In a class of this embodiment, the multifunctional stand further comprises a joint sheath sleeved outside the upper joint and preventing the external thread of the upper joint from scratching hands.

In a class of this embodiment, the joint sheath is provided with a hollow structure; an upper end of the joint sheath is provided with a circumferential inner wall in threaded connection with the upper joint; a clearance between the circumferential inner wall of the lower end of the joint sheath (4) and a circumferential outer wall of the lower joint) is adapted for screwing the upper end of the connecting knob therein.

In a class of this embodiment, an anti-rotation structure is provided between the upper joint and the lower joint, for preventing the upper joint and the lower joint from rotating relative to each other.

In a class of this embodiment, the anti-rotation structure comprises a clamping head provided with a wider upper part and a narrower lower part, or a clamping slot provided with a narrower upper part and a wider lower part and formed at the lower end of the upper joint, and a clamping slot or a clamping head matched with the clamping head or the clamping slot and formed at the upper end of the lower joint.

In a class of this embodiment, the clamping head is a pyramidal boss, and the clamping slot is in the form of a corresponding pyramidal slot.

In a class of this embodiment, a ball joint is provided at the upper end of the supporting seat, and a lower joint is secured to the ball joint.

In a class of this embodiment, the lower end of the lower joint is inserted into the ball joint and is in threaded connection with the ball joint; and glue is further applied to positions where the lower joint and the ball joint fit to each other.

In a class of this embodiment, a connecting structure is a threaded central hole formed on the lower joint and adapted for being connected with the adapting platform.

In a class of this embodiment, a stepped hole in the axial direction is formed at the upper end face of the upper joint; the lower end of the main rod is inserted into the stepped hole and abuts against a step surface of the stepped hole; an outer wall of the lower end head of the main rod is in threaded connection with an inner wall of the upper joint by means of thread; and glue is further applied to surfaces where the main rod and the upper joint fit to each other.

In a class of this embodiment, the supporting seat is configured as a tripod supporting seat consisting of a fixed seat and short supporting legs distributed and connected at positions surrounding the fixed seat.

In a class of this embodiment, the short supporting legs are foldable supporting legs.

Compared with the prior art, the above technical solution of the invention has the following advantages:
(1) In the multifunctional stand of the invention, at the lower end of the main rod is provided a first connecting structure, and at the upper end of the supporting seat is provided a second connecting structure; the first connecting structure and the second connecting structure are detachably connected with each other; and the second connecting structure is adapted for mountting the adapting platform. That is, not only can the multifunctional stand of the invention be used as a high-mounted stand, but also the first connecting structure and the second connecting structure are detachably connected with each other in the invention, so that the detached main rod can be used as an ordinary unipod, and after the adapting platform is mounted to the detached supporting seat through the second connecting structure, a low-angle stand can be formed to meet low-angle shooting requirement. Therefore, the multifunctional stand of the invention, when being in an assembled state, can be used as a high-mounted stand and can meet high-stand shooting requirement, and the multifunctional stand of the invention can also be used as a simple unipod and a low-mounted stand when being disassembled.
(2) In the multifunctional stand of the invention, the lower end of the first connecting structure is adapted for being connected with a foot pin, so that the main rod can be used as an ordinary unipod after being detached from the supporting seat.
(3) In the multifunctional stand of the invention, the first connecting structure comprises an upper joint secured to the lower end of the main rod, and a connecting knob slidably sleeved on the upper joint and restricted from slipping off from the lower end of the upper joint; the second connecting structure comprises a lower joint secured to the upper end of the supporting seat, and a connecting structure formed on the lower joint and adapted for being connected with the adapting platform; the connecting knob is in threaded connection with the lower joint, and the connecting knob is screwed tightly to drive the upper joint to abut against the lower joint, so as to allow the main rod to be tightly connected with the supporting seat; in the invention, locking between the main rod and the supporting seat is realized in such a manner that the connecting knob sleeved on the upper joint drives the upper joint to abut against the lower joint and comes into threaded connection with the lower joint, so the structure is simple and assembly and disassembly are convenient.
(4) In the multifunctional stand of the invention, the upper joint is pyramidal , provided with a narrower upper part and a wider lower part, and at the upper end of the connecting knob is formed a corresponding pyramidal inner cavity; on the inner wall of the lower end of the connecting knob is formed internal thread, and at the upper end of the lower joint is formed an external thread matched with the internal thread; as the upper joint is configured to be pyramidal , provided with a narrower upper part and a wider lower part, the connecting knob sleeved on the upper joint can be prevented from slipping off from the lower end of the upper joint; meanwhile, as the upper joint and the connecting knob are fit to each other by pyramidal surfaces, the connecting knob applies a certain downward extrusion force to the upper joint in the screwing process, so that the upper joint can tightly abut against the lower joint, and relative sliding will not occur after screwing tightly.
(5) In the multifunctional stand of the invention, outside the lower joint is also sleeved a joint sheath preventing the external thread of the lower joint from scratching hands. The joint sleeve is arranged to prevent the external thread on the lower joint which are not connected with the connecting knob from scratching users' hands or other objects during use.
(6) In the multifunctional stand of the invention, the joint sheath has a hollow structure; the circumferential inner wall of the lower end of the joint sheath is in threaded connection with the lower joint; and the clearance between the circumferential inner wall of the upper end of the joint sheath and the circumferential outer wall of the lower joint is adapted for screwing the lower end of the connecting knob therein, so that when the supporting seat is connected with the adapting platform and used as a low-angle stand, the external thread of the lower joint can be protected by the joint sheath to avoid damage to the external thread, and meanwhile, when connection is conducted, one end of the connecting knob can be concealed in the clearance, so that the whole structure is more compact and beautiful.
(7) In the multifunctional stand of the invention, the first connecting structure comprises an upper joint secured to the lower end of the main rod; the second connecting structure comprises a lower joint secured to the upper end of the supporting seat, a connecting structure formed on the lower joint and adapted to connect the adapting platform, and a connecting knob slidably sleeved on the lower joint and restricted from slipping off from the upper end of the lower joint; the connecting knob is in threaded connection with the upper joint, and the connecting knob is screwed tightly to drive the lower joint to abut against the upper joint, so that the main rod is tightly connected with the supporting seat. In the invention, locking between the main rod and the supporting seat is realized in such a manner that the connecting knob sleeved on the lower joint drives the lower joint to abut against the upper joint and comes into threaded connection with the upper joint, so the structure is simple and assembly and disassembly are convenient.
(8) In the multifunctional stand of the invention, the upper end of the lower joint is like a pyramid which is wider at the upper part and narrower at the lower part, and at the lower end of the connecting knob is formed a corresponding pyramidal inner cavity; and on the inner wall of the upper end of the connecting knob is formed internal thread, and at the outer side wall of the upper joint is formed matched external thread. As the upper end of the lower joint is configured to be like a pyramid which is wider at the upper part and narrower at the lower part, the connecting knob sleeved on the lower joint can be prevented from slipping off from the upper end of the lower joint; meanwhile, as the lower joint and the connecting knob are fit to each other by pyramidal surfaces, the connecting knob applies a certain upward extrusion force to the upper joint in the screwing process, so that the lower joint can tightly abut against the upper joint, and relative sliding will not occur after screwing tightly.
(9) In the multifunctional stand of the invention, outside the upper joint is also sleeved a joint sheath preventing the external thread of the upper joint from scratching hands. The joint sleeve is arranged to prevent the external thread on the upper joint which are not connected with the connecting knob from scratching users' hands or other objects during use.
(10) In the multifunctional stand of the invention, the joint sheath has a hollow structure; the circumferential inner wall of the upper end of the joint sheath is in threaded connection with the upper joint; and the clearance between the circumferential inner wall of the lower end of the joint sheath and the circumferential outer wall of the lower joint is adapted for screwing the upper end of the connecting knob therein, so that when the supporting seat is connected with the adapting platform and used as a low-angle stand, the external thread of the upper joint can be protected by the joint sheath to avoid damage to the external thread, and meanwhile, when connection is conducted, one end of the connecting knob can be concealed in the clearance, so that the whole structure is more compact and beautiful.
(11) In the multifunctional stand of the invention, between the upper joint and the lower joint is also provided an anti-rotation structure preventing the upper joint and the lower joint from rotating relative to each other. The anti-rotation structure comprises a clamping head provided with a wider upper part and a narrower lower part, or a clamping slot provided with a narrower upper part and a wider lower part and formed at the lower end of the upper joint, and a clamping slot or a clamping head matched with the clamping head or the clamping slot and formed at the upper end of the lower joint. The clamping head and the clamping slot are arranged to ensure that the upper joint and the lower joint will not rotate relative to each other after being fit to each other.
(12) In the multifunctional stand of the invention, at the upper end of the supporting seat is provided a ball joint, and the lower joint is secured with the ball joint; the lower end of the lower joint is inserted into the ball joint and is in threaded connection with the ball joint; and glue is further applied to positions where the lower joint and the ball joint fit to each other, so that the lower joint can be tightly connected to the ball joint without relative rotation.
(13) In the multifunctional stand of the invention, the connecting structure is a threaded central hole formed on the lower joint and adapted for being connected with the adapting platform, so that the lower joint can be connected with an adapting screw of the adapting platform through the threaded central hole, so that the stand can be transformed to a low-angle tripod after the adapting platform is connected to the detached supporting seat.
(14) In the multifunctional stand of the invention, the clamping head at the lower end of the upper joint is a pyramidal boss, and the clamping slot is formed as a corresponding pyramidal slot. With the pyramidal configuration, clamping between the clamping head and the clamping slot can be more compact, so the upper joint and the lower joint will not rotate relative to each other after the clamping head of the upper joint is inserted into the clamping slot of the lower joint.
(15) In the multifunctional stand of the invention, at the upper end face of the upper joint is formed a stepped hole in the axial direction, and the lower end of the main rod is inserted into the stepped hole and abuts against a step surface of the stepped hole; the outer wall of the lower end head of the main rod is in threaded connection with the inner wall of the upper joint by means of thread; and glue is further applied to surfaces where the main rod and the upper joint fit to each other, so that the upper joint and the main rod can be connected firmly without falling off.
(16) In the multifunctional stand of the invention, the supporting seat is configured as a tripod supporting seat consisting of a fixed seat and short supporting legs distributed and connected at positions surrounding the fixed seat, so that after the detached supporting seat is connected with the adapting platform through the lower joint, a low-angle tripod can be formed, which not only can meet low-angle shooting requirement, but also has a tripod structure with good stabilizing effect.
(17) In the multifunctional stand of the invention, the short supporting legs are foldable supporting legs, so that in an assembled state, the multifunctional stand of the invention not only can be used as a high-mounted tripod, but also can be used as a high-mounted unipod by folding the three short supporting legs; meanwhile, when the multifunctional stand of the invention does not need to be used, the short supporting legs can be folded to reduce the size and space occupation of the multifunctional stand.

### Brief Description of the Drawings

In order that the content of the invention is more readily understood clearly, the invention will be further described in details according to particular embodiments of the invention in conjunction with the accompanying drawings, in which
Fig. 1 is a disassembly schematic view of a multifunctional stand of embodiment 1;
Fig. 2 is an assembly schematic view of the multifunctional stand of embodiment 1;
Fig. 3 is a connection schematic view of the multifunctional stand of embodiment 1;
Fig. 4 is a schematic view of a detached main rod of embodiment 1;
Fig. 5 is a schematic view of a detached supporting seat of embodiment 1;
Fig. 6 is a schematic view of a low-angle tripod formed after disassembly of embodiment 1;
Fig. 7 is a schematic view of an ordinary unipod formed after disassembly of embodiment 1; and
Fig. 8 is a connection schematic view of a multifunctional stand of embodiment 2.
Reference numerals in the figures are as follows: 1 - main rod; 10 - first connecting structure; 11 - upper joint; 111 - clamping head; 112 - stepped hole; 12 - connecting knob; 121 - pyramidal inner cavity; 122 - internal thread; 2 - adapting platform; 21 - adapting screw; 3 - supporting seat; 30 - second connecting structure; 31 - lower joint; 32 - connecting structure; 311 - external thread; 312 - clamping slot; 33 - ball joint; 4 - joint sheath; 5 - foot pin.

### Detailed Description of the Embodiments

The invention will be further discussed below by using the following embodiments in conjunction with the drawings.

### Embodiment 1

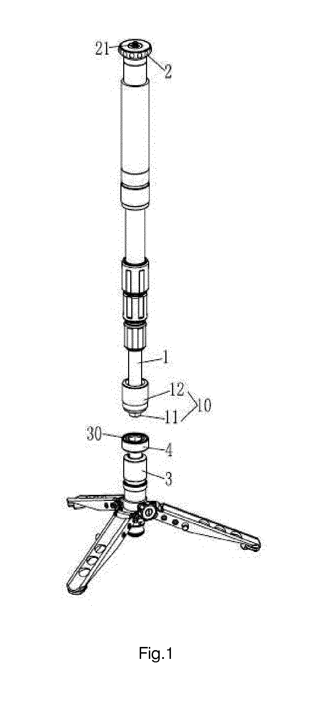

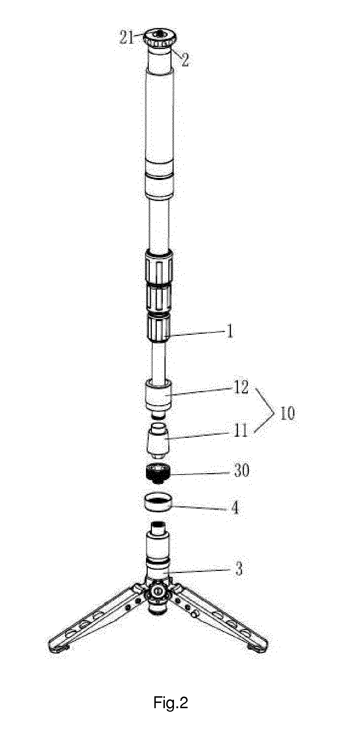

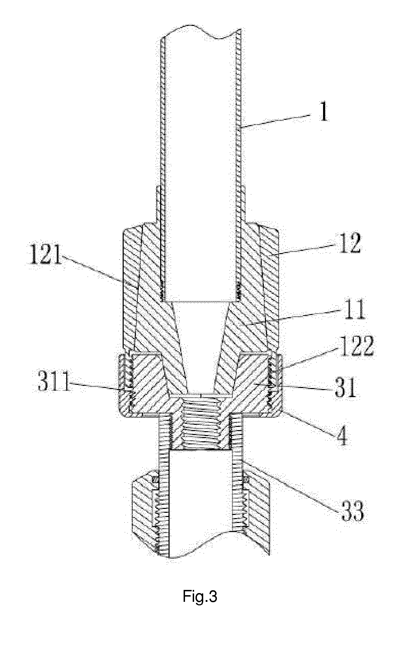

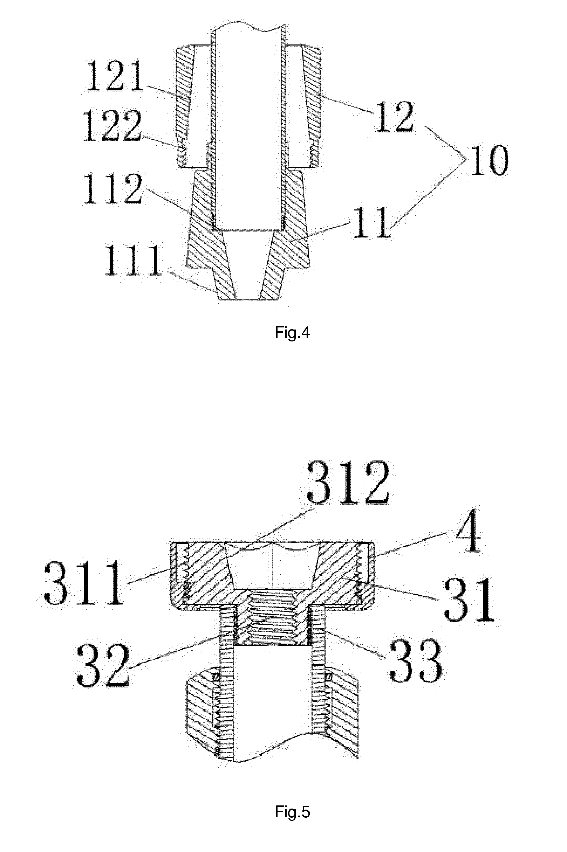

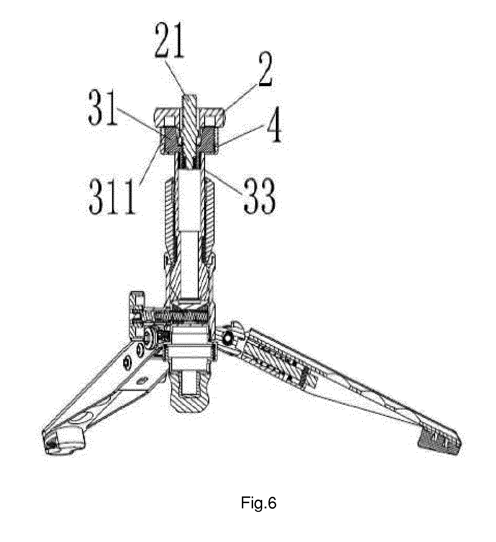

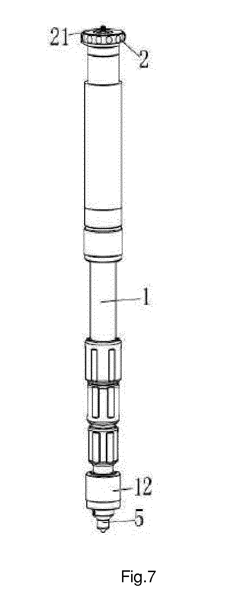

As shown in Figs. 1-7, a multifunctional stand of the embodiment comprises a main rod 1; an adapting platform 2 arranged at the upper end of the main rod 1 and adapted to fix photographic or video shooting equipment; and a supporting seat 3 arranged at the lower end of the main rod 1 and used for supporting the main rod 1; at the lower end of the main rod 1 is provided a first connecting structure 10, and at the upper end of the supporting seat 3 is provided a second connecting structure 30; the first connecting structure 10 and the second connecting structure are detachably connected with each other; and the second connecting structure 30 is adapted to mount the adapting platform 2. In the embodiment, the multifunctional stand, when being in an assembled state, can be used as a high-mounted stand and can meet high-stand shooting requirement; meanwhile, in the embodiment, the first connecting structure10 and the second connecting structure 30 are detachably connected with each other, so that the detached main rod 1 can be used as an ordinary unipod, and after the adapting platform 2 is mounted to the detached supporting seat 3 through the second connecting structure 30, a low-angle stand can be formed to meet low-angle shooting requirement, and therefore, the multifunctional stand of the invention can form a high-mounted stand, a simple unipod and a low-angle stand through assembly and disassembly. In summary, the multifunctional stand of the embodiment can meet requirement on various different usage occasions.

The first connecting structure 10 comprises an upper joint 11 secured to the lower end of the main rod 1, and a connecting knob 12 slidably sleeved on the upper joint 11 and restricted from slipping off from the lower end of the upper joint 11; the second connecting structure 30 comprises a lower joint 31 secured to the upper end of the supporting seat 3, and a connecting structure 32 formed on the lower joint 31 and adapted to connect the adapting platform 2; and the connecting knob 12 is in threaded connection with the lower joint 31, and the connecting knob 12 is screwed tightly to drive the upper joint 11 to abut against the lower joint 31, so as to allow the main rod 1 to be tightly connected with the supporting seat 3. In the embodiment, locking between the main rod 1 and the supporting seat 3 is realized in such a manner that the connecting knob 12 sleeved on the upper joint 11 drives the upper joint 11 to abut against the lower joint 31 and comes into threaded connection with the lower joint 31, so the structure is simple and assembly and disassembly are convenient.

As a preferred embodiment, the upper joint 11 is pyramidal, provided with a narrower upper part and a wider lower part, and at the upper end of the connecting knob 12 is formed a corresponding pyramidal inner cavity 121; on the inner wall of the lower end of the connecting knob 12 is formed an internal thread 122, and at the upper end of the lower joint 31 is formed an external thread 311 matched with the internal thread; the foot pin 5 is provided with an external thread; and the internal thread 122 of the connecting knob 12 are adapted for being connected with the external thread of the foot pin 5. In the embodiment, the lower end of the connecting knob 12 is adapted for being connected with the foot pin 5, so that when the main rod 1 together with the adapting platform 2 are detached from the supporting seat 3, and used as an ordinary unipod, the foot pin 5 can be directly connected to the lower end of the connecting knob 12, to prevent damage to the connecting knob 12 or the upper joint 11 during use. In the embodiment, as the upper joint 11 is configured to be pyramidal, provided with a narrower upper part and a wider lower part, the connecting knob 12 sleeved on the upper joint 11 can be prevented from slipping off from the lower end of the upper joint 11; meanwhile, as the upper joint 11 and the connecting knob 12 are fit to each other by pyramidal surfaces, the connecting knob 12 applies a certain downward extrusion force to the upper joint 11 in the screwing process, so that the upper joint 11 can tightly abut against the upper joint 31, and relative sliding will not occur after screwing tightly. Meanwhile, between the upper joint 11 and the lower joint 31 is also provided an anti-rotation structure preventing the upper joint 11 and the lower joint 31 from rotating relative to each other. In the embodiment, the anti-rotation structure comprises a clamping head 111 provided with a wider upper part and a narrower lower part and formed at the lower end of the upper joint 11, and a clamping slot 312 matched with the clamping head 111 and formed at the upper end of the lower joint 31; of course, it is also possible that the clamping slot 312, provided with a narrower upper part and a wider lower part, is formed on the upper joint 11, and the matched clamping head 111 is formed on the lower joint 31; with the configuration of the clamping head 111 and the clamping slot 312, the upper joint 11 and the lower joint 31 will not rotate relative to each other after being fit to each other. As a preferred embodiment, the clamping head 111 at the lower end of the upper joint 11 is a pyramidal boss, such as a hexagonal pyramidal boss, and the clamping slot 312 is formed as a corresponding pyramidal slot, which can be a hexagonal pyramidal slot; With the polygonal pyramidal configuration, the clamping between the clamping head 111 and the clamping slot 312 can be more compact, so the upper joint 11 and the lower joint 31 will not rotate relative to each other after the clamping head 111 of the upper joint 11 is inserted into the clamping slot 312 of the lower joint 31.

Further, in the embodiment, at the upper end of the supporting seat is provided a ball joint 33, and the lower joint 31 is secured with the ball joint 33; the lower end of the lower joint 31 is inserted into the ball joint 33 and is in threaded connection with the ball joint 33; and glue is further applied to positions where the lower joint 31 and the ball joint 33 fit to each other, so that the lower joint 31 can be tightly connected to the ball joint 33 without relative rotation.

The connecting structure 32 is a threaded central hole formed on the lower joint 31 and adapted for being connected with the adapting platform 2, and in the embodiment, the threaded central hole is formed at the lower end of the lower joint 31 and is communicated with the clamping slot 312. That is, in the embodiment, the lower joint 31 can be connected with an adapting screw 21 of the adapting platform 2 through the threaded central hole, so that the stand can be transformed to a low-angle tripod after the adapting platform 2 is connected to the detached supporting seat 3.

At the upper end face of the upper joint 11 is formed a stepped hole in the axial direction, and the lower end of the main rod 1 is inserted into the stepped hole and abuts against a step surface of the stepped hole; the outer wall of the lower end head of the main rod 1 is in threaded connection with the inner wall of the upper joint 11 by means of thread; and glue is further applied to surfaces where the main rod 1 and the upper joint 11 fit to each other, so that the upper joint 11 and the main rod 1 can be connected firmly without falling off.

Based on the above embodiment, outside the lower joint 31 is also sleeved a joint sheath 4 preventing the external thread 311 of the lower joint 31 from scratching hands. The joint sleeve 4 is arranged to prevent the external thread 311 on the lower joint 31 which are not connected with the connecting knob 12 from scratching users' hands or other objects during use.

As a preferred embodiment, the joint sheath has a hollow structure; the circumferential inner wall of the lower end of the joint sheath 4 is in threaded connection with the lower joint 31; and the clearance between the circumferential inner wall of the upper end of the joint sheath 4 and the circumferential outer wall of the lower joint 31 is adapted for screwing the lower end of the connecting knob 12 therein. In the embodiment, when the supporting seat 3 is connected with the adapting platform 2 and used as a low-angle stand, the external thread 311 of the lower joint 31 can be protected by the joint sheath 4 to avoid damage to the external thread 311.

In the embodiment, the supporting seat 3 is configured as a tripod supporting seat consisting of a fixed seat and short supporting legs distributed and connected at positions surrounding the fixed seat. Thus after the detached supporting seat 3 is connected with the adapting platform 2 through the lower joint 31, a low-angle tripod can be formed, which not only can meet low-angle shooting requirement, but also has a tripod structure with good stabilizing effect. Meanwhile, in the embodiment, in order to reduce the size and space occupation of the multifunctional stand, the short supporting legs can be foldable legs. Thus when the multifunctional stand of the invention does not need to be used, the short supporting legs can be folded; meanwhile, with the configuration of the foldable supporting legs, the multifunctional stand of the invention, when being in an assembled state, not only can be used as a high-mounted tripod, but also can be used as a high-mounted unipod by folding the three short supporting legs.

### Embodiment 2

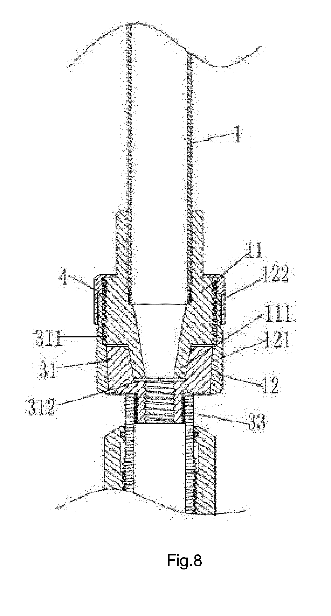

As shown in Fig. 8, the embodiment differs from embodiment 1 in that the first connecting structure 10 comprises an upper joint 11 secured to the lower end of the main rod 1; the second connecting structure 30 comprises a lower joint 31 secured to the upper end of the supporting seat 3, a connecting structure 32 formed on the lower joint 31 and adapted for being connected with the adapting platform 2, and a connecting knob 12 slidably sleeved on the lower joint 31 and restricted from slipping off from the upper end of the lower joint 31; the connecting knob 12 is in threaded connection with the upper joint 11, and the connecting knob 12 is screwed tightly to drive the upper joint 11 to abut against the lower joint 31, so as to allow the main rod 1 to be tightly connected with the supporting seat 3. In the embodiment, locking between the supporting seat 3 and the main rod 1 is achieved in such a manner that the connecting knob 12 sleeved on the lower joint 31 drives the lower joint 31 to abut against the upper joint 11 and comes into threaded connection with the upper joint 11, so the structure is simple and assembly and disassembly are convenient.

A preferred configuration is introduced in the embodiment: the upper end of the lower joint 31, on which the connecting knob 12 is sleeved, is pyramidal, provided with a wider upper part and a narrower lower part, and at the lower end of the connecting knob 12 is formed a corresponding pyramidal inner cavity 121; on the inner wall of the upper end of the connecting knob 12 is formed an internal thread 122, and at the outer side wall of the upper joint 11 is formed an external thread 311 matched with the internal thread; the foot pin 5 is provided with internal thread; and the external thread 311 of the upper joint 11 are adapted for being connected with the internal thread of the foot pin 5. In the embodiment, the lower end of the upper joint 11 is adapted for being connected with the foot pin 5, so that when the main rod 1 together with the adapting platform 2 are detached from the supporting seat 3, and used as an ordinary unipod, the foot pin 5 can be directly connected to the lower end of the upper joint 11, to prevent damage to the upper joint 11 during use.

Outside the upper joint 11 is also sleeved a joint sheath 4 preventing the external thread 311 of the upper joint 11 from scratching hands. The structure of the joint sheath 4 is preferable as follows: the joint sheath has a hollow structure; the circumferential inner wall of the upper end of the joint sheath 4 is in threaded connection with the upper joint 11; and the clearance between the circumferential inner wall of the lower end of the joint sheath 4 and the circumferential outer wall of the lower joint 31 is adapted for screwing the upper end of the connecting knob 12 therein.

As the upper end of the lower joint is configured to be pyramidal, provided with a wider upper part and a narrower lower part, the connecting knob sleeved on the lower joint can be prevented from slipping off from the upper end of the lower joint; meanwhile, as the lower joint and the connecting knob are fit to each other by pyramidal surfaces, the connecting knob applies a certain downward extrusion force to the upper joint in the screwing process, so that the lower joint can tightly abut against the upper joint, and relative sliding will not occur after screwing tightly.

It is apparent that the above embodiments are only examples for the sake of clear description, instead of limiting the implementing ways. To those of ordinary skill in the relevant art, other modifications or alterations in various forms can also be made based on the above description. It does not need nor is possible to give all implementing ways herein in an exhaustive manner. Obvious modifications or alternations derived therefrom are still in the protection scope of the invention creation.

## Claims

1. A multifunctional stand, comprising
a main rod (1);
an adapting platform (2), arranged at an upper end of the main rod (1) and adapted for fixing a photographic or video shooting equipment; and
a supporting seat (3) for supporting the main rod (1), arranged at a lower end of the main rod (1),
wherein, further comprising
a first connecting structure (10), provided at the lower end of the main rod (1);
a second connecting structure (30), adapted for mounting the adapting platform (2), provided at an upper end of the supporting seat (3) and detachably connected with the first connecting structure (10).

2. The multifunctional stand of claim 1, wherein, a lower end of the first connecting structure (10) is adapted for being connected with a foot pin (5).

3. The multifunctional stand of claim 1 or 2, wherein"
the first connecting structure (10) comprises an upper joint (11) secured to the lower end of the main rod (1), and a connecting knob (12) slidably sleeved on the upper joint (11) and restricted from slipping off from a lower end of the upper joint (11);
the second connecting structure (30) comprises a lower joint (31) secured to the upper end of the supporting seat (3), and a connecting structure (32) formed on the lower joint (31) and adapted for being connected with the adapting platform (2); and
the connecting knob (12) is in threaded connection with the lower joint (31), and the connecting knob (12) is screwed tightly to drive the upper joint (11) to abut against the lower joint (31), so as to allow the main rod (1) to be tightly connected with the supporting seat (3).

4. The multifunctional stand of claim 3, wherein,
the upper end of the upper joint (11) is pyramidal , provided with a narrower upper part and a wider lower part;
a corresponding pyramidal inner cavity (121) is formed at an upper end of the connecting knob (12) ;
an internal thread (122) is formed on an inner wall of a lower end of the connecting knob (12);
an external thread (311) matched with the internal thread (122) is formed at an upper end of the lower joint (31);
the foot pin (5) is provided with an external thread; and the internal thread (122) of the connecting knob (12) are adapted for being connected with the external thread of the foot pin (5).

5. The multifunctional stand of claim 4, wherein further comprising
a joint sheath (4), sleeved outside the lower joint (31), for preventing the external thread (311) of the lower joint (31) from scratching hands.

6. The multifunctional stand of claim 5, wherein,
the joint sheath is provided with a hollow structure;
the lower end of the joint sheath (4) is provided with a circumferential inner wall in threaded connection with the lower joint (31) provided with a circumferential outer wall;
a clearance provided between the circumferential inner wall of the upper end of the joint sheath (4) and the circumferential outer wall of the lower joint (31) is adapted for screwing the lower end of the connecting knob (12) therein.

7. The multifunctional stand of claim 1 or 2, wherein,
the first connecting structure (10) comprises an upper joint (11) secured to the lower end of the main rod (1);
the second connecting structure (30) comprises a lower joint (31) secured to the upper end of the supporting seat (3),
a connecting structure (32) is formed on the lower joint (31) and adapted for being connected the adapting platform (2);
a connecting knob (12) is slidably sleeved on the lower joint (31) and restricted from slipping off from the upper end of the lower joint (31); and
the connecting knob (12) is in threaded connection with the upper joint (11), and
the connecting knob (12) is screwed tightly to drive the lower joint (31) to abut against the upper joint (11), so as to allow the main rod (1) to be tightly connected with the supporting seat (3).

8. The multifunctional stand of claim 7, wherein,
the upper end of the lower joint (31) is pyramidal , provided with a wider upper part and a narrower lower part,
a corresponding pyramidal inner cavity (121) is formed at a lower end of the connecting knob (12) ;
an internal thread (122) is formed on an inner wall of the upper end of the connecting knob (12),
an external thread (311) matched with the internal thread is formed at an outer side wall of the upper joint (11);
the foot pin is provided with an internal thread; and the external thread (311) of the upper joint (11) is adapted for being connected with the internal thread of the foot pin (5).

9. The multifunctional stand of claim 8, wherein further comprising
a joint sheath (4) sleeved outside the upper joint (11) and preventing the external thread (311) of the upper joint (11) from scratching hands.

10. The multifunctional stand of claim 9, wherein,
the joint sheath is provided with a hollow structure;
an upper end of the joint sheath (4) is provided with a circumferential inner wall in threaded connection with the upper joint (11);
a clearance between the circumferential inner wall of the lower end of the joint sheath (4) and a circumferential outer wall of the lower joint (31) is adapted for screwing the upper end of the connecting knob (12) therein.

11. The multifunctional stand of any of claims 3-10, wherein,
an anti-rotation structure is provided between the upper joint (11) and the lower joint (31), for preventing the upper joint (11) and the lower joint (31) from rotating relative to each other.

12. The multifunctional stand of claim 11, wherein,
the anti-rotation structure comprises a clamping head (111) provided with a wider upper part and a narrower lower part, or a clamping slot (312) provided with a narrower upper part and a wider lower part and formed at the lower end of the upper joint (11), and a clamping slot (312) or a clamping head (111) matched with the clamping head (111) or the clamping slot (312) and formed at the upper end of the lower joint (31).

13. The multifunctional stand of claim 12, wherein,
the clamping head (111) is a pyramidal boss, and the clamping slot (312) is in the form of a corresponding pyramidal slot.

14. The multifunctional stand of any of claims 2-13, wherein,
a ball joint (33) is provided at the upper end of the supporting seat (3), and a lower joint (31) is secured to the ball joint (33).

15. The multifunctional stand of claim 14, wherein,
the lower end of the lower joint (31) is inserted into the ball joint (33) and is in threaded connection with the ball joint (33); and glue is further applied to positions where the lower joint (31) and the ball joint (33) fit to each other.

16. The multifunctional stand of any of claims 3-15, wherein,
a connecting structure (32) is a threaded central hole formed on the lower joint (31) and adapted for being connected with the adapting platform (2).

17. The multifunctional stand of any of claims 3-16, wherein,
a stepped hole in the axial direction is formed at the upper end face of the upper joint (11);
the lower end of the main rod (1) is inserted into the stepped hole and abuts against a step surface of the stepped hole;
an outer wall of the lower end head of the main rod (1) is in threaded connection with an inner wall of the upper joint (11) by means of thread; and glue is further applied to surfaces where the main rod (1) and the upper joint (11) fit to each other.

18. The multifunctional stand of any of claims 1-17, wherein,
the supporting seat (3) is configured as a tripod supporting seat consisting of a fixed seat and short supporting legs distributed and connected at positions surrounding the fixed seat.

19. The multifunctional stand of claim 18, wherein,
the short supporting legs are foldable supporting legs.
